(19) **Europäisches Patentamt / European Patent Office / Office européen des brevets**

(11) **EP 1 915 870 B1**

(12) **EUROPEAN PATENT SPECIFICATION**

(45) Date of publication and mention
of the grant of the patent:
**08.03.2017 Bulletin 2017/10**

(51) Int Cl.:
*H04N 19/30* (2014.01)     *H04N 19/503* (2014.01)

(21) Application number: **06760205.2**

(22) Date of filing: **19.05.2006**

(86) International application number:
**PCT/US2006/019520**

(87) International publication number:
**WO 2007/018670 (15.02.2007 Gazette 2007/07)**

(54) **METHOD AND APPARATUS FOR WEIGHTED PREDICTION FOR SCALABLE VIDEO CODING**

VERFAHREN UND VORRICHTUNG ZUR GEWICHTETEN PRÄDIKTION FÜR SKALIERBARE VIDEOCODIERUNG

PROCEDE ET APPAREIL DE PREDICTION PONDEREE POUR CODAGE VIDEO EVOLUTIF

(84) Designated Contracting States:
AT BE BG CH CY CZ DE DK EE ES FI FR GB GR HU IE IS IT LI LT LU LV MC NL PL PT RO SE SI SK TR

(30) Priority: **21.07.2005 US 701464 P**

(43) Date of publication of application:
**30.04.2008 Bulletin 2008/18**

(73) Proprietor: **Thomson Licensing**
**92130 Issy-les-Moulineaux (FR)**

(72) Inventors:
• **YIN, Peng**
**West Windsor, New Jersey 08550 (US)**
• **BOYCE, Jill MacDonald**
**Manalapan, New Jersey 07726 (US)**
• **PANDIT, Purvin Bibhas**
**Franklin Park, New Jersey 08823 (US)**

(74) Representative: **Vidon Brevets & Stratégie et al**
**16B, rue de Jouanet**
**B.P. 90333**
**Technopole Atalante**
**35703 Rennes Cedex 7 (FR)**

(56) References cited:
**EP-A2- 1 737 243**

• **LEE K: "Extension of weighted prediction to multi layer structure" JOINT VIDEO TEAM (JVT) OF ISO/IEC MPEG & ITU-T VCEG (ISO/IEC JTC1/SC29/WG11 AND ITU-T SG16 Q.6), DOCUMENT JVT-P076, [Online] 19 July 2005 (2005-07-19), XP002399725 Retrieved from the Internet: URL:http://ftp3.itu.int/av-arch/jvt-site/2 005_07_Poznan/JVT-P076.doc> [retrieved on 2006-09-20]**
• **JVT: "Joint Scalable Video Model JSVM-2" JOINT VIDEO TEAM (JVT) OF ISO/IEC MPEG & ITU-T VCEG (ISO/IEC JTC1/SC29/WG11 AND ITU-T SG16 Q.6), DOCUMENT JVT-O202, 16 April 2005 (2005-04-16), pages 1-31, XP002399745 cited in the application -& JVT: "Scalable Video Coding - Working Draft 2" JOINT VIDEO TEAM (JVT) OF ISO/IEC MPEG & ITU-T VCEG (ISO/IEC JTC1/SC29/WG11 AND ITU-T SG16 Q.6), DOCUMENT JVT-O202 ANNEX S, 16 April 2005 (2005-04-16), pages 1-134, XP002399746**
• **BOYCE J M: "Weighted prediction in the H.264/MPEG AVC video coding standard" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages III-789, XP010719383 ISBN: 0-7803-8251-X**

- **YIN P ET AL: "Weighted Prediction in SVC" JOINT VIDEO TEAM (JVT) OF ISO/IEC MPEG & ITU-T VCEG (ISO/IEC JTC1/SC29/WG11 AND ITU-T SG16 Q.6), DOCUMENT JVT-P064, [Online] 21 July 2005 (2005-07-21), XP002399866 Retrieved from the Internet: URL:http://ftp3.itu.int/av-arch/jvt-site/2 005_07_Poznan/JVT-P064.zip> [retrieved on 2006-09-20]**

- **INTERNET DOCUMENT: "Index of /av-arch/jvt-site/2005_07_Poznan" ITU-T, [Online] XP002399726 Retrieved from the Internet: URL:http://ftp3.itu.int/av-arch/jvt-site/2 005_07_Poznan/> [retrieved on 2006-09-20]**

**Description**

FIELD OF THE INVENTION

The present invention relates generally to video encoding and decoding and, more particularly, to methods and apparatus for weighted prediction for scalable video encoding and decoding.

BACKGROUND OF THE INVENTION

The International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 standard (hereinafter the "MPEG4/H.264 standard" or simply the "H.264 standard") is the first international video coding standard to include a Weighted Prediction (WP) tool. Weighted Prediction was adopted to improve coding efficiency. The scalable video coding (SVC) standard, developed as an amendment of the H.264 standard, also adopts weighted prediction. However, the SVC standard does not explicitly specify the relationship of weights among a base layer and its enhancement layers.

Weighted Prediction is supported in the Main, Extended, and High profiles of the H.264 standard. The use of WP is indicated in the sequence parameter set for P and SP slices using the weighted_pred_flag field, and for B slices using the weighting_bipred_idc field. There are two WP modes, an explicit mode and an implicit mode. The explicit mode is supported in P, SP, and B slices. The implicit mode is supported in only B slices.

A single weighting factor and offset are associated with each reference picture index for each color component in each slice. In explicit mode, these WP parameters may be coded in the slice header. In implicit mode, these parameters are derived based on the relative distance of the current picture and its reference pictures.

For each macroblock or macroblock partition, the weighting parameters applied are based on a reference picture index (or indices in the case of bi-prediction) of the current macroblock or macroblock partition. The reference picture indices are either coded in the bitstream or may be derived, e.g., for skipped or direct mode macroblocks. The use of the reference picture index to signal which weighting parameters to apply is bitrate efficient, as compared to requiring a weighting parameter index in the bitstream, since the reference picture index is already available based on the other required bitstream fields.

Many different methods of scalability have been widely studied and standardized, including SNR scalability, spatial scalability, temporal scalability, and fine grain scalability, in scalability profiles of the MPEG-2 and H.264 standards, or are currently being developed as an amendment of the H.264 standard.

For spatial, temporal and SNR scalability, a large degree of inter-layer prediction is incorporated. Intra and inter macroblocks can be predicted using the corresponding signals of previous layers. Moreover, the motion description of each layer can be used for a prediction of the motion description for following enhancement layers. These techniques fall into three categories: inter-layer intra texture prediction, inter-layer motion prediction and inter-layer residue prediction.

In Joint Scalable Video Model (JSVM) 2.0, an enhancement layer macroblock can exploit inter-layer prediction using scaled base layer motion data, using either "BASE_LAYER_MODE" or "QPEL_REFINEMENT_MODE", as in case of dyadic (two-layer) spatial scalability. When inter-layer motion prediction is used, the motion vector (including its reference picture index and associated weighting parameters) of the corresponding (upsampled) MB in the previous layer is used for motion prediction. If the enhancement layer and its previous layer have different pred_weight_table() values, we need to store different sets of weighting parameters for the same reference picture in the enhancement layer.

The document "Extension of weighted prediction to multi layer structure", Joint Video Team (JVT) of ISO/IEC MPEG & ITU-T VCEG, JVT-P076, which was submitted to the Poznan meeting in July 2005, discloses weighted prediction for scalable coding, wherein the same weighting parameter is applied to the enhancement layer as that used for a corresponding lower layer picture.

The document EP 1 737 243 A2 discloses the selection between inter-layer weighted prediction, no weighted prediction, or conventional weighted prediction (implicit weighted prediction, explicit weighted prediction etc.), for the enhancement layer.

5 SUMMARY OF THE INVENTION

These and other drawbacks and disadvantages of the prior art are addressed by the present invention, which is directed to methods and apparatus for weighted prediction for scalable video encoding.

These and other aspects, features and advantages of the present invention will become apparent from the following detailed description of exemplary embodiments, which is to be read in connection with the accompanying drawings.

The solution according to the invention is set out by the claims.

5 BRIEF DESCRIPTION OF THE DRAWINGS

The present invention may be better understood in accordance with the following exemplary figures, in which:

FIG. 1 shows a block diagram for an exemplary Joint Scalable Video Model (JSVM) 2.0 encoder to which the present principles may be applied;
FIG. 2 shows a block diagram for an exemplary decoder to which the present principles may be applied;
FIG. 3 is a flow diagram for an exemplary method for scalable video encoding of an image block using weighted prediction in accordance with an exemplary embodiment of the present principles;
FIG. 4 is a flow diagram for an exemplary method for scalable video decoding of an image block using weighted prediction in accordance with an exemplary embodiment of the present principles;
FIG. 5 is a flow diagram for an exemplary method for decoding level_idc and profile_idc syntaxes in accordance with an exemplary embodiment of the present principles; and
FIG. 6 is a flow diagram for an exemplary method for decoding a weighted prediction constraint for an enhancement layer in accordance with an exemplary embodiment of the present principles.

DETAILED DESCRIPTION

The present invention is directed to methods and apparatus for weighted prediction for scalable video encoding and decoding.
In accordance with the principles of the present invention, methods and apparatus are disclosed which re-use the base layer weighting parameters for enhancement layer weighted prediction. Advantageously, embodiments in accordance with the present principles can save on memory and/or complexity for both the encoder and decoder. Moreover, embodiments in accordance with the present principles can also save bits at very low bitrates.
The present description illustrates the principles of the present invention.
All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.
Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.
The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.
Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.
In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. It is thus regarded that any means that can provide those functionalities are equivalent to those shown herein.
In accordance with embodiments of the present principles, a method and apparatus are disclosed which re-use the base layer weighting parameters for the enhancement layer. Since the base layer is simply the downsampled version of the enhancement layer, it is beneficial if the enhancement layer and the base layer have the same set of weighting parameters for the same reference picture.
In addition, other advantages/features are provided by the present principles. One advantage/feature is that only one set of weighting parameters needs to be stored for each enhancement layer, which can save memory usage.

In addition, when inter-layer motion prediction is used, the decoder needs to know which set of weighting parameters is used. A look-up table may be utilized to store the necessary information.

Another advantage/feature is a reduction in complexity at both the encoder and decoder. At the decoder, embodiments of the present principles can reduce the complexity of parsing and table lookup to locate the right set of weighting parameters. At the encoder, embodiments of the present principles can reduce the complexity of using different algorithms and, thus, making decisions for weighting parameters estimation. When an update step is used and prediction weights are taken into consideration, having multiple weighting parameters for the same reference picture index will make the derivation of motion information in inverse-update step at the decoder and update step at the encoder more complicated.

Yet another advantage/feature is at very low bitrates, embodiments of the present principles can also have a slight advantage of coding efficiency, since weighting parameters are not explicitly transmitted in the slice header for the enhancement layer.

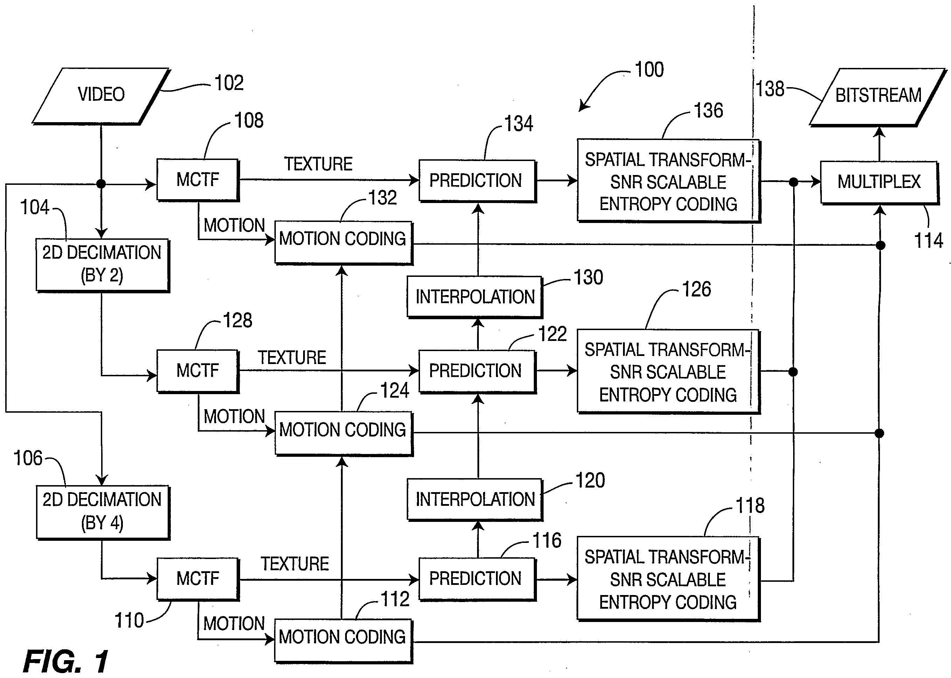

Turning to FIG. 1, an exemplary Joint Scalable Video Model Version 2.0 (hereinafter "JSVM2.0") encoder to which the present invention may be applied is indicated generally by the reference numeral 100. The JSVM2.0 encoder 100 uses three spatial layers and motion compensated temporal filtering. The JSVM encoder 100 includes a two-dimensional (2D) decimator 104, a 2D decimator 106, and a motion compensated temporal filtering (MCTF) module 108, each having an input for receiving video signal data 102.

An output of the 2D decimator 106 is connected in signal communication with an input of a MCTF module 110. A first output of the MCTF module 110 is connected in signal communication with an input of a motion coder 112, and a second output of the MCTF module 110 is connected in signal communication with an input of a prediction module 116. A first output of the motion coder 112 is connected in signal communication with a first input of a multiplexer 114. A second output of the motion coder 112 is connected in signal communication with a first input of a motion coder 124. A first output of the prediction module 116 is connected in signal communication with an input of a spatial transformer 118. An output of the spatial transformer 118 is connected in signal communication with a second input of the multiplexer 114. A second output of the prediction module 116 is connected in signal communication with an input of an interpolator 120. An output of the interpolator is connected in signal communication with a first input of a prediction module 122. A first output of the prediction module 122 is connected in signal communication with an input of a spatial transformer 126. An output of the spatial transformer 126 is connected in signal communication with the second input of the multiplexer 114. A second output of the prediction module 122 is connected in signal communication with an input of an interpolator 130. An output of the interpolator 130 is connected in signal communication with a first input of a prediction module 134. An output of the prediction module 134 is connected in signal communication with a spatial transformer 136. An output of the spatial transformer is connected in signal communication with the second input of a multiplexer 114.

An output of the 2D decimator 104 is connected in signal communication with an input of a MCTF module 128. A first output of the MCTF module 128 is connected in signal communication with a second input of the motion coder 124. A first output of the motion coder 124 is connected in signal communication with the first input of the multiplexer 114. A second output of the motion coder 124 is connected in signal communication with a first input of a motion coder 132. A second output of the MCTF module 128 is connected in signal communication with a second input of the prediction module 122.

A first output of the MCTF module 108 is connected in signal communication with a second input of the motion coder 132. An output of the motion coder 132 is connected in signal communication with the first input of the multiplexer 114. A second output of the MCTF module 108 is connected in signal communication with a second input of the prediction module 134. An output of the multiplexer 114 provides an output bitstream 138.

For each spatial layer, a motion compensated temporal decomposition is performed. This decomposition provides temporal scalability. Motion information from lower spatial layers can be used for prediction of motion on the higher layers. For texture encoding, spatial prediction between successive spatial layers can be applied to remove redundancy. The residual signal resulting from intra prediction or motion compensated inter prediction is transform coded. A quality base layer residual provides minimum reconstruction quality at each spatial layer. This quality base layer can be encoded into an H.264 standard compliant stream if no inter-layer prediction is applied. For quality scalability, quality enhancement layers are additionally encoded. These enhancement layers can be chosen to either provide coarse or fine grain quality (SNR) scalability.

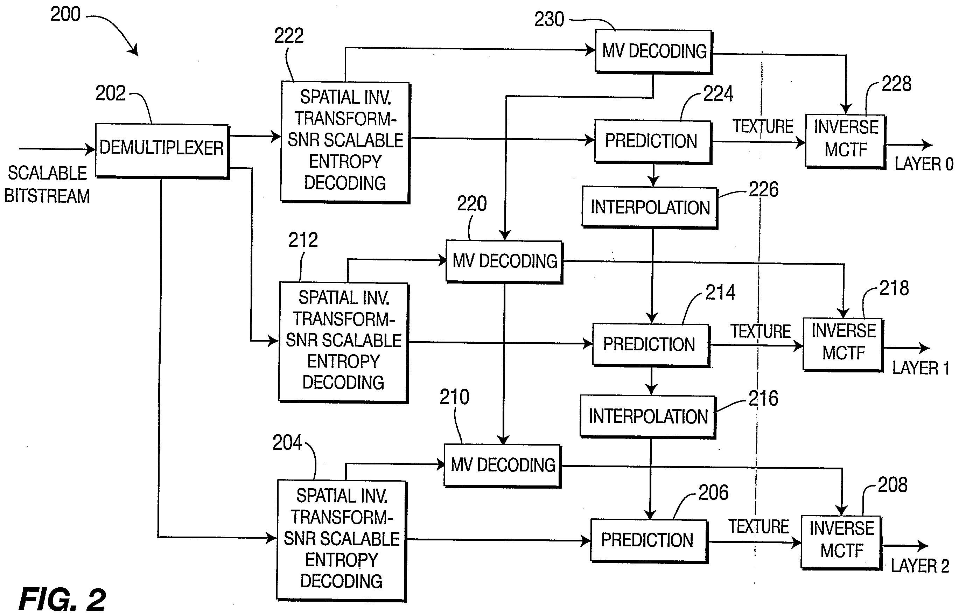

Turning to FIG. 2, an exemplary scalable video decoder to which the present invention may be applied is indicated generally by the reference numeral 200. An input of a demultiplexer 202 is available as an input to the scalable video decoder 200, for receiving a scalable bitstream. A first output of the demultiplexer 202 is connected in signal communication with an input of a spatial inverse transform SNR scalable entropy decoder 204. A first output of the spatial inverse transform SNR scalable entropy decoder 204 is connected in signal communication with a first input of a prediction module 206. An output of the prediction module 206 is connected in signal communication with a first input of an inverse MCTF module 208.

A second output of the spatial inverse transform SNR scalable entropy decoder 204 is connected in signal communication with a first input of a motion vector (MV) decoder 210. An output of the MV decoder 210 is connected in signal communication with a second input of the inverse MCTF module 208.

A second output of the demultiplexer 202 is connected in signal communication with an input of a spatial inverse transform SNR scalable entropy decoder 212. A first output of the spatial inverse transform SNR scalable entropy decoder 212 is connected in signal communication with a first input of a prediction module 214. A first output of the prediction module 214 is connected in signal communication with an input of an interpolation module 216. An output of the interpolation module 216 is connected in signal communication with a second input of the prediction module 206. A second output of the prediction module 214 is connected in signal communication with a first input of an inverse MCTF module 218.

A second output of the spatial inverse transform SNR scalable entropy decoder 212 is connected in signal communication with a first input of an MV decoder 220. A first output of the MV decoder 220 is connected in signal communication with a second input of the MV decoder 210. A second output of the MV decoder 220 is connected in signal communication with a second input of the inverse MCTF module 218.

A third output of the demultiplexer 202 is connected in signal communication with an input of a spatial inverse transform SNR scalable entropy decoder 222. A first output of the spatial inverse transform SNR scalable entropy decoder 222 is connected in signal communication with an input of a prediction module 224. A first output of the prediction module 224 is connected in signal communication with an input of an interpolation module 226. An output of the interpolation module 226 is connected in signal communication with a second input of the prediction module 214.

A second output of the prediction module 224 is connected in signal communication with a first input of an inverse MCTF module 228. A second output of the spatial inverse transform SNR scalable entropy decoder 222 is connected in signal communication with an input of an MV decoder 230. A first output of the MV decoder 230 is connected in signal communication with a second input of the MV decoder 220. A second output of the MV decoder 230 is connected in signal communication with a second input of the inverse MCTF module 228.

An output of the inverse MCTF module 228 is available as an output of the decoder 200, for outputting a layer 0 signal. An output of the inverse MCTF module 218 is available as an output of the decoder 200, for outputting a layer 1 signal. An output of the inverse MCTF module 208 is available as an output of the decoder 200, for outputting a layer 2 signal.

In an exemplary embodiment in accordance with the present principles, one syntax element, base_pred_weight_table_flag, is introduced in the slice header syntax in the scalable extension as shown in Table 1, so that the encoder can adaptively select which mode is used for weighted prediction on a slice basis. When base_pred_weight_table_flag is not present, base_pred_weight_table_flag shall be inferred to be equal to 0. When base_pred_weight_table_flag is equal to 1, this indicates that the enhancement layer re-uses pred_weight_table() from its previous layer.

Table 1 illustrates syntax for weighted prediction for scalable video coding.

**TABLE 1**

| slice_header_in_scalable_extension( ) { | C | Descriptor |
|---|---|---|
| **first_mb_in_slice** | 2 | ue(v) |
| **slice_type** | 2 | ue(v) |
| **pic_parameter_set_id** | 2 | ue(v) |
| if( slice_type == PR) { | | |
| **num_mbs_in_slice_minus1** | 2 | ue(v) |
| **luma_chroma_sep_flag** | 2 | u(1) |
| } | | |
| **frame_num** | 2 | u(v) |
| if( !frame_mbs_only_flag ) { | | |
| **field_pic_flag** | 2 | u(1) |
| if( field_pic_flag ) | | |
| **bottom_field_flag** | 2 | u(1) |
| } | | |
| if( nal_unit_type == 21 ) | | |

(continued)

| slice_header_in_scalable_extension( ) { | C | Descriptor |
|---|---|---|
| **idr_pic_id** | 2 | ue(v) |
| if( pic_order_cnt_type == 0 ) { | | |
| **Pic_order_cnt_lsb** | 2 | u(v) |
| if( pic_order_present_flag && !field_pic flag ) | | |
| **delta_pic_order_cnt_bottom** | 2 | se(v) |
| } | | |
| if( pic_order_cnt_type == 1 && !delta_pic_order_always_zero_flag ) { | | |
| **delta_pic_order_cnt[ 0 ]** | 2 | se(v) |
| if( pic_order_present_flag && !field_pic_flag) | | |
| **delta_pic_order_cnt[ 1 ]** | 2 | se(v) |
| } | | |
| if( slice_type != PR ) { | | |
| if( redundant_pic_cnt_present_flag ) | | |
| **redundant_pic_cnt** | 2 | ue(v) |
| if( slice_type == EB ) | | |
| **direct_spatial_mv_pred_flag** | 2 | u(1) |
| **key_picture_flag** | 2 | u(1) |
| **decomposition_stages** | 2 | ue(v) |
| **base_id_plus1** | 2 | ue(v) |
| if( base_id_plus1 != 0 ) { | | |
| **adaptive_prediction_flag** | 2 | u(1) |
| } | | |
| if( slice_type == EP \|\| slice_type == EB ) { | | |
| **num_ref_idx_active_override_flag** | 2 | u(1) |
| if( num_ref_idx_active_override_flag ) { | | |
| **num_ref_idx_l0_active_minus1** | 2 | ue(v) |
| if( slice_type == EB) | | |
| **num_ref_idx_l1_active_minus1** | 2 | ue(v) |
| } | | |
| } | | |
| ref_pic_list_reordering( ) | 2 | |
| for( decLvl = temporal_level; decLvl < decomposition_stages; decLvl++ ) { | | |
| **num_ref_idx_update_l0_active[** decLvl + 1 **]** | 2 | ue(v) |
| **num_ref_idx_update_l1_active[** decLvl + 1 **]** | 2 | ue(v) |
| } | | |
| if( ( weighted_pred_flag && slice_type == EP ) \|\| ( weighted_bipred_idc == 1 && slice_type == EB ) ) | | |

(continued)

| slice_header_in_scalable_extension( ) { | C | Descriptor |
|---|---|---|
| { | | |
| if ( (base_id_plus1 != 0) && ( adaptive_prediction_flag == 1) ) | | |
| base_pred_weight_table_flag | 2 | u(1) |
| if ( base_pred_weight_table_flag == 0) | | |
| pred_weight_table( ) | 2 | |
| } | | |
| if( nal_ref_idc != 0 ) | | |
| dec_ref_pic_marking( ) | 2 | |
| if( entropy_coding_mode_flag && slice_type != EI ) | | |
| **cabac_init_idc** | 2 | ue(v) |
| } | | |
| **slice_qp_delta** | 2 | se(v) |
| if( deblocking_filter_control_present_flag ) { | | |
| **disable_deblocking_filter_idc** | 2 | ue(v) |
| if( disable_deblocking_filter_idc != 1 ) { | | |
| **slice_alpha_c0_offset_div2** | 2 | se(v) |
| **slice_beta_offset_div2** | 2 | se(v) |
| } | | |
| } | | |
| if( slice_type != PR) | | |
| if( num_slice_groups_minus1 > 0 && slice_group_map_type >= 3 && slice_group_map_type <= 5) | | |
| **slice_group_change_cycle** | 2 | u(v) |
| if( slice_type != PR && extended_spatial_scalability > 0 ) { | | |
| if ( chroma_format_idc > 0) { | | |
| **base_chroma_phase_x_plus1** | 2 | u(2) |
| **base_chroma_phase_y_plus1** | 2 | u(2) |
| } | | |
| if( extended_spatial_scalability == 2 ) { | | |
| **scaled_base_left_offset** | 2 | se(v) |
| **scaled_base_top_offset** | 2 | se(v) |
| **scaled_base_right_offset** | 2 | se(v) |
| **scaled_base_bottom_offset** | 2 | se(v) |
| } | | |
| } | | |
| SpatialScalabilityType = spatial_scalability_type( ) | | |
| } | | |

**EP 1 915 870 B1**

At the decoder, when the enhancement layer is to re-use the weights from the base layer, a remapping of pred_weight_table() is performed from the base (or previous) layer to pred_weight_table() in the current enhancement layer. This process is utilized for the following cases: in a first case, the same reference picture index in the base layer and the enhancement layer indicates a different reference picture; or in a second case, the reference picture used in the enhancement layer does not have a corresponding match in the base layer. For the first case, the picture order count (POC) number is used to map the weighting parameters from the base layer to the right reference picture index in the enhancement layer. If multiple weighting parameters are used in the base layer, the weighting parameters with the smallest reference picture index are preferably, but not necessarily, mapped first. For the second case, it is presumed that base_pred_weight_table_flag is set to 0 for the reference picture which is not available in the enhancement layer. The remapping of pred_weight_table() from the base (or previous) layer to pred_weight_table() in the current enhancement layer is derived as follows. The process is referred to as an inheritance process for pred_weight_table(). In particular, this inheritance process is invoked when base_pred_weight_table_flag is equal to 1. Outputs of this process are as follows:

- luma_weight_LX[ ] (with X being 0 or 1)

- luma_offset_LX[ ] (with X being 0 or 1)

- chroma_weight_LX[ ] (with X being 0 or 1)

- chroma_offset_LX[ ] (with X being 0 or 1)

- luma_log2_weight_denom

- chroma_log2_weight_denom

The derivation process for the base pictures is invoked with basePic as output. For X being replaced by either 0 or 1, the following applies:

- Let base_luma_weight_LX[ ] be the value of syntax element luma_weight_LX[ ] value of the base picture basePic.

- Let base_luma_offset_LX[ ]be the value of syntax element luma_offset_LX[ ] of the base picture basePic.

- Let base_chroma_weight_LX[ ] be the value of syntax element chroma_weight_LX[ ] of the base picture basePic.

- Let base_chroma_offset_LX[ ] be the value of syntax element chroma_offset_LX[ ] value of the base picture basePic.

- Let base_luma_log2_weight_denom be the value of syntax element luma_log2_weight_denom value of the base picture basePic.

- Let base_chroma_log2_weight_denom be the value of syntax element chroma_log2_weight_denom of the base picture basePic.

- Let BaseRefPicListX be the reference index list RefPicListX of the base picture basePic.

- For each reference index refIdxLX in the current slice reference index list RefPicListX (loop from 0 to num_ref_idx_X_active_minus1), its associated weighting parameters in the current slice are inherited as follows:

    - Let refPic be the picture that is referenced by refIdxLX

    - Let refPicBase, the reference picture of the corresponding base layer, be considered to exist if there is a picture for which all of the following conditions are true.

    - The syntax element dependency_id for the picture refPicBase is equal to the variable DependencyIdBase of the picture refPic.

    - The syntax element quality_level for the picture refPicBase is equal to the variable QualityLevelBase of the picture refPic.

- The syntax element fragment_order for the picture refPicBase is equal to the variable FragmentOrderBase of the picture refPic.

- The value of PicOrderCnt( refPic ) is equal to the value of PicOrderCnt( refPicBase ).

- There is an index baseRefIdxLX equal to the lowest valued available reference index in the corresponding base layer reference index list BaseRefPicListX that references refPicBase.

- If a refPicBase was found to exist the following applies:

  - baseRefIdxLX is marked as unavailable for subsequent steps of the process.

$$\text{luma\_log2\_weight\_denom} = \text{base\_luma\_log2\_weight\_denom} \tag{1}$$

$$\text{chroma\_log2\_weight\_denom} = \text{base\_chroma\_log2\_weight\_denom} \tag{2}$$

$$\text{luma\_weight\_LX[refIdxLX]} = \text{base\_luma\_weight\_LX[baseRefIdxLX]} \tag{3}$$

$$\text{luma\_offset\_LX[refIdxLX]} = \text{base\_luma\_offset\_LX[baseRefIdxLX]} \tag{4}$$

$$\text{chroma\_weight\_LX[refIdxLX][0]} = \text{base\_chroma\_weight\_LX[baseRefIdxLX][0]} \tag{5}$$

$$\text{chroma\_offset\_LX[refIdxLX][0]} = \text{base\_chroma\_offset\_LX[baseRefIdxLX][0]} \tag{6}$$

$$\text{chroma\_weight\_LX[refIdxLX][1]} = \text{base\_chroma\_weight\_LX[baseRefIdxLX][1]} \tag{7}$$

$$\text{chroma\_offset\_LX[refIdxLX][1]} = \text{base\_chroma\_offset\_LX[baseRefIdxLX][1]} \tag{8}$$

- Otherwise,

$$\text{luma\_log2\_weight\_denom} = \text{base\_luma\_log2\_weight\_denom} \tag{9}$$

$$\text{chroma\_log2\_weight\_denom} = \text{base\_chroma\_log2\_weight\_denom} \tag{10}$$

$$\text{luma\_weight\_LX[refIdxLX]} = 1 << \text{luma\_log2\_weight\_denom} \quad (11)$$

$$\text{luma\_offset\_LX[refIdxLX]} = 0 \quad (12)$$

$$\text{chroma\_weight\_LX[refIdxLX][0]} = 1 << \text{chroma\_log2\_weight\_denom} \quad (13)$$

$$\text{chroma\_offset\_LX[refIdxLX][0]} = 0 \quad (14)$$

$$\text{chroma\_weight\_LX[refIdxLX][1]} = 1 << \text{chroma\_log2\_weight\_denom} \quad (15)$$

$$\text{chroma\_offset\_LX[refIdxLX][1]} = 0 \quad (16)$$

The following is one exemplary method to implement the inheritance process:

```
for( baseRefldxLX = 0; baseRefldxLX <= base_num_ref_idx_IX_active_minus1;
 baseRefldxLX ++ )
      base_ref_avail[baseRefldxLX ] = 1
      for( refldxLX = 0; refldxLX <= num_ref_idx_IX_active_minus1; refldxLX ++ ) {
      base_weights_avail_flag[refldxLX ] = 0
      for( baseRefldxLX =0; baseRefldxLX <= base_num_ref_idx_IX_active_minus1;
      baseRefldxLX ++) {
            if (base_ref_avail[baseRefldxLX ] && (PicOrderCnt(RefPicListX[refldxLX ])
            == PicOrderCnt(BaseRefPicListX[baseRefldxLX ])
            )){
                  apply equations (1) to (8)
                  base_ref_avail[baseRefldxLX ] = 0
                  base_weights_avail_flag[refldxLX ] = 1
                  break;
            }
      }
      if (base_weights_avail_flag[refldxLX ] == 0) {
            apply equations (9) to (16)
      }
      } (17)
```

If the enhancement layer picture and the base layer picture have the same slice partitioning, the remapping of pred_weight_table() from the base (or lower) layer to pred_weight_table() in the current enhancement layer can be performed on a slice basis. However, if the enhancement layer and the base layer have a different slice partitioning, the remapping of pred_weight_table() from the base (or lower) layer to pred_weight_table() in the current enhancement layer needs to be performed on macroblock basis. For example, when the base layer and the enhancement layer have the same two slice partitions, the inheritance process can be called once per slice. In contrast, if the base layer has two partitions and the enhancement layer has three partitions, then the inheritance process is called on a macroblock basis.

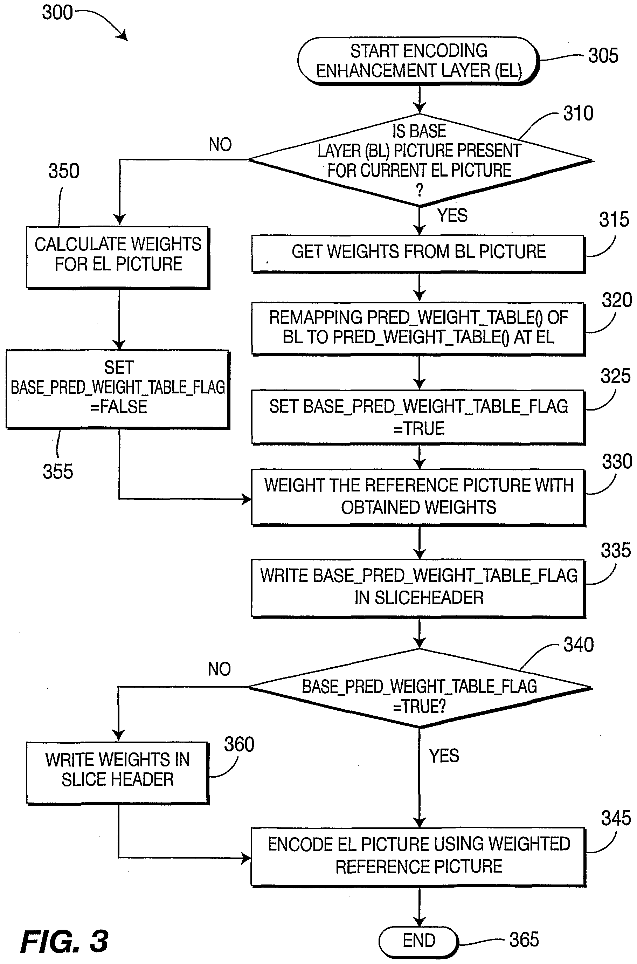

Turning to FIG. 3, an exemplary method for scalable video encoding of an image block using weighted prediction is indicated generally by the reference numeral 300.

A start block 305 starts encoding a current enhancement layer (EL) picture, and passes control to a decision block 310. The decision block 310 determines whether or not a base layer (BL) picture is present for the current EL picture. If so, then control is passed to a function block 350. Otherwise, control is passed to a function block 315.

The function block 315 obtains the weights from the BL picture, and passes control to a function block 320. The function block 320 remaps pred_weight_table() of the BL to pred_weight_table() of the enhancement layer, and passes control to a function block 325. The function block 325 sets base_pred_weight_table_flag equal to true, and passes control to a function block 330. The function block 330 weights the reference picture with the obtained weights, and passes control to a function block 335. The function block 335 writes base_pred_weight_table_flag in the slice header, and passes control to a decision block 340. The decision block 340 determines whether or not the base_pred_weight_table_flag is equal to true. If so, then control is passed to a function block 345. Otherwise, control is passed to a function block 360.

The function block 350 calculates the weights for the EL picture, and passes control to a function block 355. The function block 355 sets base_pred_weight_table_flag equal to false, and passes control to the function block 330.

The function block 345 encodes the EL picture using the weighted reference picture, and passes control to an end block 365.

The function block 360 writes the weights in the slice header, and passes control to the function block 345.

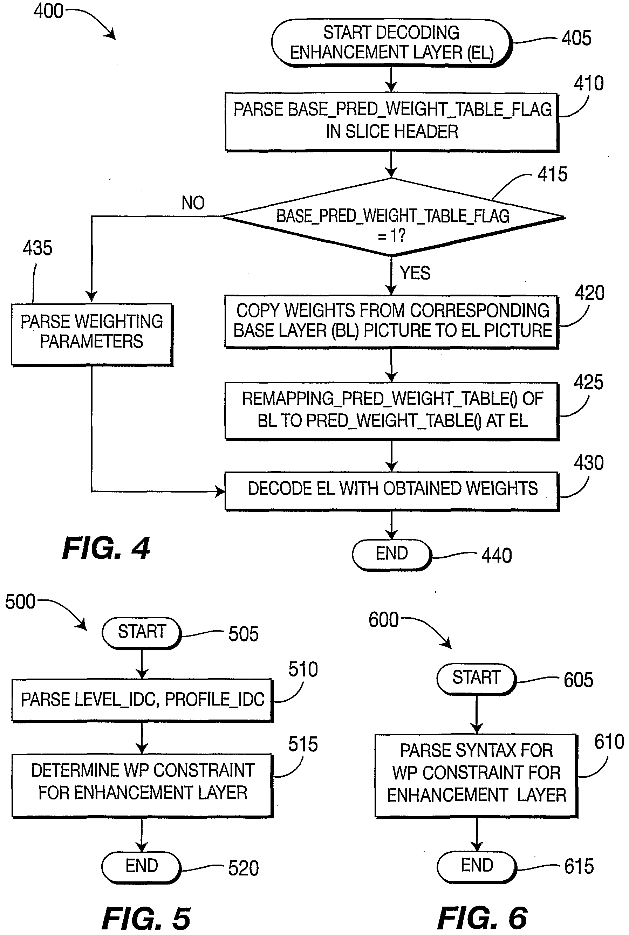

Turning to FIG. 4, an exemplary method for scalable video decoding of an image block using weighted prediction is indicated generally by the reference numeral 400.

A start block 405 starts decoding a current enhancement layer (EL) picture, and passes control to a function block 410. The function block 410 parses base_pred_weight_table_flag in the slice header, and passes control to a decision block 415. The decision block 415 determines whether or not base_pred_weight_table_flag is equal to one. If so, then control is passed to a function block 420. Otherwise, control is passed to a function block 435.

The function block 420 copies weights from the corresponding base layer (BL) picture to the EL picture, and passes control to a function block 425. The function block 425 remaps pred_weight_table() of the BL picture to pred_weight_table() of the EL picture, and passes control to a function block 430. The function block 430 decodes the EL picture with the obtained weights, and passes control to an end block 440.

The function block 435 parses the weighting parameters, and passes control to the function block 430.

Turning to FIG. 5, an exemplary method for decoding level_idc and profile_idc syntaxes is indicated generally by the reference numeral 500.

A start block 505 passes control to a function block 510. The function block 510 parses level_idc and profile_idc syntaxes, and passes control to a function block 515. The function block 515 determines the weighted prediction constraint for the enhancement layer based on the parsing performed by function block 510, and passes control to an end block 520.

Turning to FIG. 6, an exemplary method for decoding a weighted prediction constraint for an enhancement layer is indicated generally by the reference numeral 600.

A start block 605 passes control to a function block 610. The function block 610 parses syntax for weighted prediction for the enhancement layer, and passes control to an end block 615.

A description will now be given of some of the many attendant advantages/features of the present invention, some of which have been mentioned above. For example, one advantage/feature is a scalable video encoder, that includes an encoder for encoding a block in an enhancement layer of a picture by applying a same weighting parameter to an enhancement layer reference picture as that applied to a particular lower layer reference picture used for encoding a block in a lower layer of the picture, wherein the block in the enhancement layer corresponds to the block in the lower layer, and the enhancement layer reference picture corresponds to the particular lower layer reference picture. Another advantage/feature is the scalable video encoder as described above, wherein the encoder encodes the block in the enhancement layer by selecting between an explicit weighting parameter mode and an implicit weighting parameter mode. Further, another advantage/feature is the scalable video encoder as described above, wherein the encoder adds a syntax in a slice header, for a slice in the enhancement layer, to selectively apply the same weighting parameter to the enhancement layer reference picture or a different weighting parameter. Also, another advantage/feature is the scalable video encoder as described above, wherein the encoder performs a remapping of a pred_weight_table() syntax from the lower layer to a pred_weight_table() syntax for the enhancement layer. Additionally, another advantage/feature is the scalable video encoder with the remapping as described above, wherein the encoder uses a picture order count to remap weighting parameters from the lower layer to a corresponding reference picture index in the enhancement layer. Moreover, another advantage/feature is the scalable video encoder with the remapping using the picture order count as described above, wherein the weighting parameters with a smallest reference picture index are remapped first. Further, another advantage/feature is the scalable video encoder with the remapping as described above, wherein the encoder sets a weighted_prediction_flag field to zero for a reference picture used in the enhancement layer that is unavailable in the lower layer. Also, another advantage/feature is the scalable video encoder with the remapping as described above, wherein the encoder sends, in a slice header, weighting parameters for a reference picture index corresponding to a reference picture used in the enhancement layer, when the reference picture used in the enhancement layer is without a match in the lower layer. Morever, another advantage/feature is the scalable video encoder with the remapping as described above, wherein the encoder performs the remapping on a slice basis when the picture has a same slice partitioning in both the enhancement layer and the lower layer, and the encoder performs the remapping on a macroblock basis when the picture has a different slice partitioning in the enhancement layer with respect to the lower layer. Further, another advantage/feature is the scalable video encoder as described above, wherein the encoder performs a remapping of a pred_weight_table() syntax from the lower layer to a pred_weight_table() syntax for the enhancement layer, when the encoder applies the same weighting parameter to the enhancement layer reference picture as that applied to the particular lower layer reference picture. Also, another advantage/feature is the scalable video encoder as described above, wherein the encoder skips performing weighting parameters estimation, when the encoder applies the same weighting parameter to the enhancement layer reference picture as that applied to the particular lower layer reference picture. Additionally, another advantage/feature is the scalable video encoder as described above, wherein the encoder stores only one set of weighting parameters for each reference picture index, when the encoder applies the same weighting parameter to the enhancement layer reference picture as that applied to the particular lower layer reference picture. Moreover, another advantage/feature is the scalable video encoder-as described above, wherein the encoder estimates the weighting parameters, when the encoder applies a different weighting parameter or the enhancement layer is without the lower layer.

These and other features and advantages of the present invention may be readily ascertained by one of ordinary skill in the pertinent art based on the teachings herein. It is to be understood that the teachings of the present invention may be implemented in various forms of hardware, software, firmware, special purpose processors, or combinations thereof.

Most preferably, the teachings of the present invention are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present

## Claims

1. An apparatus comprising:

   an encoder (100) for encoding a block in an enhancement layer of a picture by applying a weighting parameter to an enhancement layer reference picture,
   wherein said encoder (100) selects whether to apply the same weighting parameter to the enhancement layer reference picture as that applied to a lower layer reference picture used for encoding a block in a lower layer of the picture, wherein the block in the enhancement layer corresponds to the block in the lower layer, and the enhancement layer reference picture corresponds to the lower layer reference picture, or whether to apply a different weighting parameter,
   and wherein said encoder provides a corresponding syntax in a slice header, for a slice in the enhancement layer.

2. The apparatus of claim 1, wherein said encoder (100) encodes the block in the enhancement layer by selecting between an explicit weighting parameter mode and an implicit weighting parameter mode.

3. The apparatus of claim 1, wherein said encoder (100) uses a picture order count to remap weighting parameters from the lower layer to a corresponding reference picture index in the enhancement layer.

4. The apparatus of claim 3 , wherein the weighting parameters with a smallest reference picture index are remapped first.

5. The apparatus of claim 1, wherein said encoder (100) sets a weighted_prediction flag field to zero for a reference picture used in the enhancement layer that is unavailable in the lower layer.

6. The apparatus of claim 1, wherein said encoder (100) sends, in a slice header, weighting parameters for a reference picture index corresponding to a reference picture used in the enhancement layer, when the reference picture used in the enhancement layer is without a match in the lower layer.

7. The apparatus of claim 1, wherein said encoder (100) performs a remapping of the weighting parameters from the lower layer to a corresponding reference picture index in the enhancement layer, on a slice basis when the picture has a same slice partitioning in both the enhancement layer and the lower layer, and said encoder performs said remapping on a macroblock basis when the picture has a different slice partitioning in the enhancement layer with respect to the lower layer.

8. The apparatus of claim 1, wherein said encoder (100) performs a remapping of a reference picture weighting table syntax from the lower layer to a reference picture weighting table syntax for the enhancement layer, when said encoder applies the same weighting parameter to the enhancement layer reference picture as that applied to the lower layer reference picture.

9. The apparatus of claim 1, wherein said encoder (100) skips performing weighting parameters estimation, when said encoder applies the same weighting parameter to the enhancement layer reference picture as that applied to the lower layer reference picture.

10. The apparatus of claim I, wherein said encoder (100) stores only one set of weighting parameters for each reference picture index, when said encoder applies the same weighting parameter to the enhancement layer reference picture as that applied to the lower layer reference picture.

11. The apparatus of claim I, wherein said encoder (100) estimates the weighting parameters, when said encoder applies a different weighting parameter or the enhancement layer is without the lower layer.

12. A method for scalable video encoding, comprising:

encoding (315) a block in an enhancement layer of a picture by applying a weighting parameter to an enhancement layer reference picture,
and wherein said encoding step selects whether to apply the same weighting parameter to the enhancement layer reference picture as that applied to a lower layer reference picture used for encoding a block in a lower layer of the picture, wherein the block in the enhancement layer corresponds to the block in the lower layer, and the enhancement layer reference picture corresponds to the lower layer reference picture, or whether to apply a different weighting parameter,
and wherein said encoding step adds a corresponding syntax in a slice header, for a slice in the enhancement layer.

13. The method of claim 12, wherein said encoding step (315) encodes the block in the enhancement layer by selecting between an explicit weighting parameter mode and an implicit weighting parameter mode.

14. The method of claim 12, wherein said encoding step comprises performing (320) a remapping of a reference picture weighting table syntax from the lower layer to a reference picture weighting table syntax for the enhancement layer.

15. The method of claim 14 , wherein said performing step (320) uses a picture order count to remap weighting parameters from the lower layer to a corresponding reference picture index in the enhancement layer.

16. The method of claim 15, wherein the weighting parameters with a smallest reference picture index are remapped first.

17. The method of claim 14, wherein said encoding step comprises setting a weighted prediction flag field to zero for a reference picture used in the enhancement layer that is unavailable in the lower layer.

18. The method of claim 14, wherein said encoding step comprises sending, in a slice header, weighting parameters for a reference picture index corresponding to a reference picture used in the enhancement layer, when the reference picture used in the enhancement layer is without a match in the lower layer.

19. The method of claim 14, wherein the remapping is performed on a slice basis when the picture has a same slice partitioning in both the enhancement layer and the lower layer, and said remapping step is performed on a macroblock basis when the picture has a different slice partitioning in the enhancement layer with respect to the lower layer.

20. The method of claim 12, wherein said encoding step comprises performing a remapping of a syntax from the lower layer to a syntax for the enhancement layer, when said encoding step applies the same weighting parameter to the enhancement layer reference picture as that applied to the lower layer reference picture.

**21.** The method of claim 12, wherein said encoding step comprises skipping (315) weighting parameters estimation, when said encoding step applies the same weighting parameter to the enhancement layer reference picture as that applied to the lower layer reference picture.

**22.** The method of claim 12, wherein said encoding step comprises storing only one set of weighting parameters for each reference picture index, when said encoding step applies the same weighting parameter to the enhancement layer reference picture as that applied to the lower layer reference picture.

**23.** The method of claim 12, wherein said encoding step comprises estimating (350) the weighting parameters, when said encoding step applies a different weighting parameter or the enhancement layer is without the lower layer.

**24.** A video signal structure for scalable video encoding comprising:

a block encoded in an enhancement layer of a picture generated by applying a weighting parameter to an enhancement layer reference picture, and
a syntax in a slice header, for a slice in the the enhancement layer, indicating whether said weighting parameter is a same weighting parameter as that applied to a lower layer reference picture used for encoding a block in the lower layer of the picture, wherein the block in the enhancement layer corresponds to the block in the lower layer, and the enhancement layer reference picture corresponds to the lower layer reference picture, or whether said weighting parameter is a different weighting parameter.

**25.** The apparatus of claim 1, wherein said syntax is pred_weight_table() in an H.264 Scalable Video Coding standard.

**26.** The method of claim 12, wherein said syntax is pred_weight table() in an H.264 Scalable Video Coding standard.

**Patentansprüche**

**1.** Vorrichtung, die umfasst:

einen Codierer (100) zum Codieren eines Blocks in einer Erweiterungsschicht eines Bilds durch Anwenden eines Gewichtungsparameters auf ein Erweiterungsschicht-Referenzbild,
wobei der Codierer (100) auswählt, ob auf das Erweiterungsschicht-Referenzbild derselbe Gewichtungsparameter wie der, der auf ein Referenzbild einer niedrigeren Schicht angewendet wird, der zum Codieren eines Blocks in einer niedrigeren Schicht des Bilds verwendet wird, wobei der Block in der Erweiterungsschicht dem Block in der niedrigeren Schicht entspricht und wobei das Erweiterungsschicht-Referenzbild dem Referenzbild der niedrigeren Schicht entspricht, angewendet werden soll oder ob ein anderer Gewichtungsparameter angewendet werden soll, und
wobei der Codierer für ein Slice in der Erweiterungs-schicht eine entsprechende Syntax in einem Slice-Anfangsblock bereitstellt.

**2.** Vorrichtung nach Anspruch 1, wobei der Codierer (100) den Block in der Erweiterungsschicht durch Auswählen zwischen einer expliziten Gewichtungsparameterbetriebsart und einer impliziten Gewichtungsparameterbetriebsart codiert.

**3.** Vorrichtung nach Anspruch 1, wobei der Codierer (100) einen Bildreihenfolgezählwert verwendet, um Gewichtungsparameter von der niedrigeren Schicht zu einem entsprechenden Referenzbildindex in der Erweiterungsschicht neu zuzuordnen.

**4.** Vorrichtung nach Anspruch 3, wobei die Gewichtungsparameter mit einem kleinsten Referenzbildindex zuerst neu zugeordnet werden.

**5.** Vorrichtung nach Anspruch 1, wobei der Codierer (100) ein weighted_prediction-Merker-Feld für ein in der Erweiterungsschicht verwendetes Referenzbild, das in der niedrigeren Schicht nicht verfügbar ist, null setzt.

**6.** Vorrichtung nach Anspruch 1, wobei der Codierer (100) Gewichtungsparameter für einen Referenzbildindex, die einem in der Erweiterungsschicht verwendeten Referenzbild entsprechen, in einem Slice-Anfangsblock sendet, wenn das in der Erweiterungsschicht verwendete Referenzbild ohne ein Gegenstück in der niedrigeren Schicht ist.

**7.** Vorrichtung nach Anspruch 1, wobei der Codierer (100) eine Neuzuordnung der Gewichtungsparameter von der niedrigeren Schicht zu einem entsprechenden Referenzbildindex in der Erweiterungsschicht auf einer Slice-Grundlage ausführt, wenn das Bild sowohl in der Erweiterungsschicht als auch in der niedrigeren Schicht eine selbe Slice-Partitionierung besitzt, und wobei der Codierer die Neuzuordnung auf einer Makroblockgrundlage ausführt, wenn das Bild in der Erweiterungsschicht in Bezug auf die niedrigere Schicht eine andere Slice-Partitionierung besitzt.

**8.** Vorrichtung nach Anspruch 1, wobei der Codierer (100) eine Neuzuordnung einer Referenzbild-Gewichtungstabellensyntax von der niedrigeren Schicht zu einer Referenzbild-Gewichtungstabellensyntax für die Erweiterungsschicht ausführt, wenn der Codierer auf das Erweiterungsschicht-Referenzbild denselben Gewichtungsparameter wie den auf das Referenzbild der niedrigeren Schicht angewendeten anwendet.

**9.** Vorrichtung nach Anspruch 1, wobei der Codierer (100) das Ausführen einer Gewichtungsparameterschätzung überspringt, wenn der Codierer auf das Erweiterungsschicht-Referenzbild denselben Gewichtungsparameter wie den auf das Referenzbild der niedrigeren Schicht angewendeten anwendet.

**10.** Vorrichtung nach Anspruch 1, wobei der Codierer (100) für jeden Referenzbildindex nur eine Menge von Gewichtungsparametern speichert, wenn der Codierer auf das Erweiterungsschicht-Referenzbild denselben Gewichtungsparameter wie den auf das Referenzbild der niedrigeren Schicht angewendeten anwendet.

**11.** Vorrichtung nach Anspruch 1, wobei der Codierer (100) die Gewichtungsparameter schätzt, wenn der Codierer einen anderen Gewichtungsparameter anwendet oder wenn die Erweiterungsschicht ohne die niedrigere Schicht ist.

**12.** Verfahren für die skalierbare Videocodierung, wobei das Verfahren umfasst:

Codieren (315) eines Blocks in einer Erweiterungsschicht eines Bilds durch Anwenden eines Gewichtungsparameters auf ein Erweiterungsschicht-Referenzbild,
und wobei der Schritt des Codierens auswählt, ob auf das Erweiterungsschicht-Referenzbild derselbe Gewichtungsparameter wie der, der auf ein Referenzbild einer niedrigeren Schicht angewendet wird, der zum Codieren eines Blocks in einer niedrigeren Schicht des Bilds verwendet wird, wobei der Block in der Erweiterungsschicht dem Block in der niedrigeren Schicht entspricht und wobei das Erweiterungsschicht-Referenzbild dem Referenzbild der niedrigeren Schicht entspricht, angewendet werden soll oder ob ein anderer Gewichtungsparameter angewendet werden soll, und
wobei der Schritt des Codierens für ein Slice in der Erweiterungsschicht eine entsprechende Syntax in einem Slice-Anfangsblock hinzufügt.

**13.** Verfahren nach Anspruch 12,
wobei der Schritt (315) des Codierens den Block in der Erweiterungsschicht durch Auswählen zwischen einer expliziten Gewichtungsparameterbetriebsart und einer impliziten Gewichtungsparameterbetriebsart codiert.

**14.** Verfahren nach Anspruch 12,
wobei der Schritt des Codierens das Ausführen (320) einer Neuzuordnung einer Referenzbild-Gewichtungstabellensyntax von der niedrigeren Schicht zu einer Referenzbild-Gewichtungstabellensyntax für die Erweiterungsschicht umfasst.

**15.** Verfahren nach Anspruch 14,
wobei der Schritt (320) des Ausführens einen Bildreihenfolgezählwert verwendet, um Gewichtungsparameter von der niedrigeren Schicht zu einem entsprechenden Referenzbildindex in der Erweiterungsschicht neu zuzuordnen.

**16.** Verfahren nach Anspruch 15,
wobei die Gewichtungsparameter mit einem kleinsten Referenzbildindex zuerst neu zugeordnet werden.

**17.** Verfahren nach Anspruch 14,
wobei der Schritt des Codierens das Nullsetzen eines Merkerfelds für gewichtete Vorhersage für ein in der Erweiterungsschicht verwendetes Referenzbild, das in der niedrigeren Schicht nicht verfügbar ist, umfasst.

**18.** Verfahren nach Anspruch 14,
wobei der Schritt des Codierens das Senden von Gewichtungsparametern für einen Referenzbildindex, die einem in der Erweiterungsschicht verwendeten Referenzbild entsprechen, in einem Slice-Anfangsblock, wenn das in der Erweiterungsschicht verwendete Referenzbild ohne ein Gegenstück in der niedrigeren Schicht ist, umfasst.

19. Verfahren nach Anspruch 14,
wobei das Neuzuordnen auf einer Slice-Grundlage ausgeführt wird, wenn das Bild sowohl in der Erweiterungsschicht als auch in der niedrigeren Schicht eine selbe Slice-Partitionierung besitzt, und wobei der Schritt des Neuzuordnens auf einer Makroblockgrundlage ausgeführt wird, wenn das Bild in der Erweiterungsschicht in Bezug auf die niedrigere Schicht eine andere Slice-Partitionierung besitzt.

20. Verfahren nach Anspruch 12,
wobei der Schritt des Codierens das Ausführen einer Neuzuordnung einer Syntax von der niedrigeren Schicht zu einer Syntax der Erweiterungsschicht umfasst, wenn der Schritt des Codierens auf das Erweiterungsschicht-Referenzbild denselben Gewichtungsparameter wie den auf das Referenzbild der niedrigeren Schicht angewendeten anwendet.

21. Verfahren nach Anspruch 12,
wobei der Schritt des Codierens das Überspringen (315) der Gewichtungsparameterschätzung umfasst, wenn der Schritt des Codierens auf das Erweiterungsschicht-Referenzbild denselben Gewichtungsparameter wie den auf das Referenzbild der niedrigeren Schicht angewendeten anwendet.

22. Verfahren nach Anspruch 12,
wobei der Schritt des Codierens das Speichern nur einer Menge von Gewichtungsparametern für jeden Referenzbildindex umfasst, wenn der Schritt des Codierens auf das Erweiterungsschicht-Referenzbild denselben Gewichtungsparameter wie den auf das Referenzbild der niedrigeren Schicht angewendeten anwendet.

23. Verfahren nach Anspruch 12,
wobei der Schritt des Codierens das Schätzen (350) der Gewichtungsparameter umfasst, wenn der Schritt des Codierens einen anderen Gewichtungsparameter anwendet oder wenn die Erweiterungsschicht ohne die niedrigere Schicht ist.

24. Videosignalstruktur zur skalierbaren Videocodierung, wobei die Videosignalstruktur umfasst:

einen in einer Erweiterungsschicht eines Bilds codierten Block, der durch Anwenden eines Gewichtungsparameters auf ein Erweiterungsschicht-Referenzbild erzeugt wird, und
eine Syntax in einem Slice-Anfangsblock für ein Slice in der Erweiterungsschicht, wobei die Syntax angibt, ob der Gewichtungsparameter ein selber Gewichtungsparameter wie der, der auf ein Referenzbild einer niedrigeren Schicht angewendet wird, der zur Codierung eines Blocks in der niedrigeren Schicht des Bilds verwendet wird, wobei der Block in der Erweiterungsschicht dem Block in der niedrigeren Schicht entspricht und wobei das Erweiterungsschicht-Referenzbild dem Referenzbild der niedrigeren Schicht entspricht, ist oder ob der Gewichtungsparameter ein anderer Gewichtungsparameter ist.

25. Vorrichtung nach Anspruch 1, wobei die Syntax pred weight table() in einem Standard H.264 für die skalierbare Videocodierung ist.

26. Verfahren nach Anspruch 12, wobei die Syntax pred_weight_table() in einem Standard H.264 für die skalierbare Videocodierung ist.

**Revendications**

1. Appareil comprenant :

un codeur (100) pour coder un bloc dans une couche d'amélioration d'une image par l'application d'un paramètre de pondération à une image de référence de la couche d'amélioration,
dans lequel ledit codeur (100) détermine s'il convient d'appliquer le même paramètre de pondération à l'image de référence de la couche d'amélioration que celui appliqué à une image de référence de la couche inférieure utilisée pour coder un bloc dans une couche inférieure de l'image, dans lequel le bloc de la couche d'amélioration correspond au bloc de la couche inférieure, et l'image de référence de la couche d'amélioration correspond à l'image de référence de la couche inférieure, ou d'appliquer un paramètre de pondération différent, et dans lequel ledit encodeur fournit une syntaxe correspondante dans un en-tête de section, pour une section de la couche d'amélioration.

2. Appareil selon la revendication 1, dans lequel ledit codeur (100) code le bloc dans la couche d'amélioration en effectuant une sélection entre un mode de paramètre de pondération explicite et un mode de paramètre de pondération implicite.

3. Appareil selon la revendication 1, dans lequel ledit codeur (100) utilise un compte d'ordre d'image pour remapper les paramètres de pondération de la couche inférieure vers un index d'image de référence correspondant dans la couche d'amélioration.

4. Appareil selon la revendication 3, dans lequel les paramètres de pondération ayant le plus petit index d'image de référence sont remappés les premiers.

5. Appareil selon la revendication 1, dans lequel ledit codeur (100) définit un champ d'indicateur weighted_prediction sur zéro pour une image de référence utilisée dans la couche d'amélioration qui n'est pas disponible dans la couche inférieure.

6. Appareil selon la revendication 1, dans lequel ledit codeur (100) envoie, dans un en-tête de section, des paramètres de pondération pour un index d'image de référence correspondant à une image de référence utilisée dans la couche d'amélioration, lorsque l'image de référence utilisée dans la couche d'amélioration ne possède pas de correspondance dans la couche inférieure.

7. Appareil selon la revendication 1, dans lequel ledit codeur (100) effectue un remappage des paramètres de pondération de la couche inférieure vers un index d'image de référence correspondant dans la couche d'amélioration basé sur les sections lorsque l'image présente le même partitionnement de sections dans la couche d'amélioration et la couche inférieure, et ledit codeur effectue ledit remappage basé sur les macroblocs lorsque l'image présente un partitionnement de sections différent dans la couche d'amélioration et la couche inférieure.

8. Appareil selon la revendication 1, dans lequel ledit codeur (100) effectue un remappage d'une syntaxe de table de pondération d'images de référence de la couche inférieure vers une syntaxe de table de pondération d'images de référence pour la couche d'amélioration, lorsque ledit codeur applique le même paramètre de pondération à l'image de référence de la couche d'amélioration que celui appliqué à l'image de référence de la couche inférieure.

9. Appareil selon la revendication 1, dans lequel ledit codeur (100) omet l'estimation des paramètres de pondération lorsque ledit codeur applique le même paramètre de pondération à l'image de référence de la couche d'amélioration que celui appliqué à l'image de référence de la couche inférieure.

10. Appareil selon la revendication 1, dans lequel ledit codeur (100) stocke un seul ensemble de paramètres de pondération pour chaque index d'image de référence, lorsque ledit codeur applique le même paramètre de pondération à l'image de référence de la couche d'amélioration que celui appliqué à l'image de référence de la couche inférieure.

11. Appareil selon la revendication 1, dans lequel ledit codeur (100) estime les paramètres de pondération lorsque ledit codeur applique un paramètre de pondération différent ou lorsque la couche d'amélioration ne possède pas de couche inférieure.

12. Procédé de codage vidéo évolutif comprenant :

le codage (315) d'un bloc dans une couche d'amélioration d'une image par l'application d'un paramètre de pondération à une image de référence de la couche d'amélioration, et dans lequel ladite étape de codage détermine s'il convient d'appliquer le même paramètre de pondération à l'image de référence de la couche d'amélioration que celui appliqué à une image de référence de la couche inférieure utilisée pour coder un bloc dans une couche inférieure de l'image, dans lequel le bloc de la couche d'amélioration correspond au bloc de la couche inférieure, et l'image de référence de la couche d'amélioration correspond à l'image de référence de la couche inférieure, ou d'appliquer un paramètre de pondération différent, et dans lequel ladite étape de codage ajoute une syntaxe correspondante dans un en-tête de section, pour une section de la couche d'amélioration.

**13.** Procédé selon la revendication 12, dans lequel ladite étape de codage (315) code le bloc dans la couche d'amélioration en effectuant une sélection entre un mode de paramètre de pondération explicite et un mode de paramètre de pondération implicite.

**14.** Procédé selon la revendication 12, dans lequel ladite étape de codage comprend l'exécution (320) d'un remappage d'une syntaxe de table de pondération d'images de référence de la couche inférieure vers une syntaxe de table de pondération d'images de référence pour la couche d'amélioration.

**15.** Procédé selon la revendication 14, dans lequel ladite étape d'exécution (320) utilise un compte d'ordre d'image pour remapper les paramètres de pondération de la couche inférieure vers un index d'image de référence correspondant dans la couche d'amélioration.

**16.** Procédé selon la revendication 15, dans lequel les paramètres de pondération ayant le plus petit index d'image de référence sont remappés les premiers.

**17.** Procédé selon la revendication 14, dans lequel ladite étape de codage comprend la définition d'un champ d'indicateur de prédiction pondérée sur zéro pour une image de référence utilisée dans la couche d'amélioration qui n'est pas disponible dans la couche inférieure.

**18.** Procédé selon la revendication 14, dans lequel ladite étape de codage comprend l'envoi, dans un en-tête de section, de paramètres de pondération pour un index d'image de référence correspondant à une image de référence utilisée dans la couche d'amélioration, lorsque l'image de référence utilisée dans la couche d'amélioration ne possède pas de correspondance dans la couche inférieure.

**19.** Procédé selon la revendication 14, dans lequel le remappage est basé sur les sections lorsque l'image présente le même partitionnement de sections dans la couche d'amélioration et la couche inférieure, et ladite étape de remappage est basée sur les macroblocs lorsque l'image présente un partitionnement de sections différent dans la couche d'amélioration et la couche inférieure.

**20.** Procédé selon la revendication 12, dans lequel ladite étape de codage comprend l'exécution d'un remappage d'une syntaxe de la couche inférieure vers une syntaxe pour la couche d'amélioration, lorsque ladite étape de codage applique le même paramètre de pondération à l'image de référence de la couche d'amélioration que celui appliqué à l'image de référence de la couche inférieure.

**21.** Procédé selon la revendication 12, dans lequel ladite étape de codage comprend l'omission (315) de l'estimation des paramètres de pondération lorsque ladite étape de codage applique le même paramètre de pondération à l'image de référence de la couche d'amélioration que celui appliqué à l'image de référence de la couche inférieure.

**22.** Procédé selon la revendication 12, dans lequel ladite étape de codage comprend le stockage d'un seul ensemble de paramètres de pondération pour chaque index d'image de référence, lorsque ladite étape de codage applique le même paramètre de pondération à l'image de référence de la couche d'amélioration que celui appliqué à l'image de référence de la couche inférieure.

**23.** Procédé selon la revendication 12, dans lequel ladite étape de codage comprend l'estimation (350) des paramètres de pondération lorsque ladite étape de codage applique un paramètre de pondération différent ou lorsque la couche d'amélioration ne possède pas de couche inférieure.

**24.** Structure de signal vidéo pour codage vidéo évolutif comprenant :

un bloc codé dans une couche d'amélioration d'une image généré par l'application d'un paramètre de pondération à une image de référence de la couche d'amélioration, et
une syntaxe dans un en-tête de section, pour une section de la couche d'amélioration, indiquant si ledit paramètre de pondération est un paramètre de pondération identique à celui appliqué à une image de référence de la couche inférieure utilisée pour coder un bloc dans la couche inférieure de l'image, où le bloc de la couche d'amélioration correspond au bloc de la couche inférieure, et l'image de référence de la couche d'amélioration correspond à l'image de référence de la couche inférieure, ou si ledit paramètre de pondération est un paramètre de pondération différent.

**25.** Appareil selon la revendication 1, dans lequel ladite syntaxe est pred_weight_table() dans une norme de codage vidéo évolutif H.264.

**26.** Procédé selon la revendication 12, dans lequel ladite syntaxe est pred_weight table() dans une norme de codage vidéo évolutif H.264.

**FIG. 1**

EP 1 915 870 B1

**FIG. 2**

EP 1 915 870 B1

300

START ENCODING
ENHANCEMENT LAYER (EL) ⟵ 305

IS BASE
LAYER (BL) PICTURE PRESENT
FOR CURRENT EL PICTURE
? ⟵ 310

NO

350

CALCULATE WEIGHTS
FOR EL PICTURE

YES

GET WEIGHTS FROM BL PICTURE ⟵ 315

REMAPPING PRED_WEIGHT_TABLE() OF
BL TO PRED_WEIGHT_TABLE() AT EL ⟵ 320

SET
BASE_PRED_WEIGHT_TABLE_FLAG
=FALSE

355

SET BASE_PRED_WEIGHT_TABLE_FLAG
=TRUE ⟵ 325

WEIGHT THE REFERENCE PICTURE WITH
OBTAINED WEIGHTS ⟵ 330

WRITE BASE_PRED_WEIGHT_TABLE_FLAG
IN SLICEHEADER ⟵ 335

BASE_PRED_WEIGHT_TABLE_FLAG
=TRUE? ⟵ 340

NO

WRITE WEIGHTS IN
SLICE HEADER ⟵ 360

YES

ENCODE EL PICTURE USING WEIGHTED
REFERENCE PICTURE ⟵ 345

**FIG. 3**

END ⟵ 365

400

START DECODING
ENHANCEMENT LAYER (EL) — 405

PARSE BASE_PRED_WEIGHT_TABLE_FLAG
IN SLICE HEADER — 410

415

BASE_PRED_WEIGHT_TABLE_FLAG
= 1?

NO

YES

435

PARSE WEIGHTING
PARAMETERS

COPY WEIGHTS FROM CORRESPONDING
BASE LAYER (BL) PICTURE TO EL PICTURE — 420

REMAPPING_PRED_WEIGHT_TABLE() OF
BL TO PRED_WEIGHT_TABLE() AT EL — 425

DECODE EL WITH OBTAINED WEIGHTS — 430

END — 440

**FIG. 4**

500

START — 505

PARSE LEVEL_IDC, PROFILE_IDC — 510

DETERMINE WP CONSTRAINT
FOR ENHANCEMENT LAYER — 515

END — 520

**FIG. 5**

600

START — 605

PARSE SYNTAX FOR
WP CONSTRAINT FOR
ENHANCEMENT LAYER — 610

END — 615

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1737243 A2